# EUROPÄISCHE PATENTANMELDUNG

(11) **EP 1 707 682 A1**
(43) Veröffentlichungstag der Anmeldung: **04.10.2006**
(21) Anmeldenummer: 05024774.1
(22) Anmeldetag: 13.11.2005
(51) Int. Cl.: E02B 7/06, E02B 3/10

(54) **Schutzwand, Deich und Verfahren zur Herstellung eines Deiches**

(30) Priorität: 10.10.2005 DE 102005048421; 20.03.2005 DE 102005013206
(71) Anmelder: Terraelast AG, 82054 Sauerlach (DE)
(72) Erfinder: Hartenburg, Roger, 68623 Lampertheim (DE); Lahl, Berthold, 85551 Kirchheim (DE); Kromer, Lothar, 82054 Sauerlach / Lochhofen (DE)
(74) Vertreter: Adolf, Michael

(57) **Zusammenfassung**

Die Schutzwand 5 weist eine flächen-, plattenförmige oder kubische Ausbildung auf, die einen Abschnitt aus einem wasserundurchlässigen Baustoff aufweist. Der Baustoff der Schutzwand 5 ist eine Verbindung aus verdichteten, mineralischen Zuschlagstoffen und einem organischen Klebstoff. Mineralische Zuschlagstoffe wie beispielsweise Sand oder Schotter sind in der Natur reichlich vorhandene Baustoffe und können vor Ort einfach und preiswert in großen Mengen beschafft werden. Vermischt mit einem organischen Klebstoff lässt sich der Baustoff in zähflüssiger Konsistenz leicht ausbringen und verarbeiten. Durch entsprechende Formgebung kann die Schutzwand 5 in vielfältiger Ausdehnung vielfach gewölbt ausgeführt werden.

Die Schutzwand 5 eignet sich zur Abdichtung von Deichen gegen Erosion bei küsten- oder flussseitigem Hochwasserschutz.

## Beschreibung

Die Erfindung betrifft eine Schutzwand nach dem Oberbegriff des Patentanspruches 1. Sie betrifft zudem einen Deich nach den Oberbegriffen der Patentansprüche 11 und 14 sowie ein Verfahren zur Herstellung eines Deiches nach dem Oberbegriff des Patentanspruches 23.

Zwei Jahrhunderthochwasser in nur fünf Jahren haben in Deutschland erneut die Gewalt und das Gefahrenpotenzial anschwellender Flüsse und anderer Gewässer unmittelbar vor Augen geführt. Durch den Bau technischer Hochwasserschutzmaßnahmen wie Deiche, Talsperren, Rückhaltebecken und anderer Schutzanlagen (Schutzwände) wird versucht, das Schutzniveau zu verbessern. Eine besondere Bedeutung kommt dabei dem Bau von Deichen an Flüssen und Küsten zu.

Typisch für die Bauweise eines Deiches ist dessen trapezförmiger Querschnitt. Der Deichkörper besteht zumeist aus verdichtetem Erd- oder Baustoffen mit einer festen, gut verwurzelten Grasnabe oder aus einer Mischung verschiedener Erd- und Baustoffen. Aus Gründen der Standsicherheit sollten die Böschungsneigungen 1:3 oder flacher sein, was auch Vorteile bei der Instandhaltung und bei notwendigen Maßnahmen gegen Wühltiere mit sich bringt. An Flussläufen haben die Böschungen in der Regel Neigungen zwischen 1:2 bis 1:3, während an Küsten die Böschungen zumindest seeseitig auch flacher ausgeführt sein können.

Die Kronenhöhe der Deiche basiert im Wesentlichen auf der Wahl des Bemessungshochwassers als Ereignis mit bestimmter Eintrittswahrscheinlichkeit (Wiederkehr in einer bestimmten Zeitspanne) bezogen auf einen bestimmten Wasserstand. Sie errechnet sich aus dem Hochwasserstand und dem sog. Freibord (zusätzliche Höhe für Windstau des Wassers, Wellenauflauf auf der Böschung, ggf. Einfluss von Eisstau und einem Sicherheitszuschlag). Beim Neubau kommt ein zusätzlicher Zuschlag für die Setzung von Untergrund und Deichkörper hinzu.

Mübestimmend für den Querschnitt sind die Durchsickerung des Deichs, seine Unterströmung und die schadlose Abführung der Sickerwässer. Lang anhaltende hohe Wasserstände und schnell fallende Wasserspiegel beeinträchtigen seine Standsicherheit. Mit der Höhe und Dauer des Einstaus wächst die Deichbruchgefahr.

Wird ein Deich unterströmt, kommt es zu Materialbewegungen und weiteren Erosionen, die den Deich immer instabiler machen. Auch die hydraulische Belastung des Deichkörpers ist insbesondere während eines Hochwassers enorm - wird sie zu groß, durchfeuchtet der Deichkörpers und das Wasser strömt auf der fluss- bzw. seeabgewandten Seite aus dem Deich heraus.

Als idealer Deichaufbau hinsichtlich der Standsicherheit bei lang anhaltendem Hochwasser hat sich der Drei-Zonen-Deichquerschnitt bewährt: Ein durchlässiger Erdstützkörper mit einem wasserseitigen Keil aus wenig durchlässigem Erdmaterial, der bei Bedarf zur Fließwegverlängerung mit einer Dichtungswand (Schlitzwand, Schmalwand, Spundwand) in den Untergrund unter dem Deich oder in eine tiefer liegende dichte Schicht einbindet. Ein solcher Deich ist beispielsweise aus der WO 00/34587 bekannt. Hier ist eine wasserundurchlässige Barriere vorgesehen, die sich Deichlängsrichtung und in der Höhe bis unterhalb der Deichkrone erstreckt. Positioniert ist die Barriere etwa mittig zwischen den beiden Böschungen. Die Barriere ist mehrteilig aufgebaut und weist in der Mitte eine wasserundurchlässige Membrane aus einem synthetischem Material auf. Lateral ist die Membran in einem balgartig gefalteten Membranabschnitt in einem Fundament fixiert.

In einer weiteren Ausführungsform ist ein Deichdeckwerk zur Sicherung der Böschung vor eindringendem Wasser vorgesehen. Hierzu dient eine mehrschichtige, wasserundurchlässige Membran, die in der Böschung verankert ist.

Hiervon ausgehend ist es Aufgabe der Erfindung eine gattungsgemäße Schutzwand anzugeben, die wirkungsvoll eine Erosion einer Küste bzw. eines Ufers verhindert oder deutlich reduziert. Die Schutzwand soll mit geringem Bauaufwand erstellt werden können. Weiter ist es Aufgabe der Erfindung gattungsgemäße Deiche anzugeben, die einen verbesserten Schutz gegenüber Erosion aufweisen sowie mit geringem Bauaufwand herstellbar sind. Zudem ist ein Verfahren zur Herstellung eines Deiches anzugeben.

Erfindungsgemäß wird die Aufgabe bezüglich der Schutzwand durch die Merkmale des Anspruches 1 gelöst.

Die Schutzwand weist eine flächen-, plattenförmige oder kubische Ausbildung auf, die einen Abschnitt aus einem wasserundurchlässigen Baustoff aufweist. Der Baustoff der Schutzwand ist eine Verbindung aus verdichteten, mineralischen Zuschlagstoffen und einem organischen Klebstoff. Mineralische Zuschlagstoffe wie beispielsweise Sand oder Schotter sind in der Natur reichlich vorhandene Baustoffe und können vor Ort einfach und preiswert in großen Mengen beschafft werden. Vermischt mit einem organischen Klebstoff lässt sich der Baustoff in zähflüssiger Konsistenz leicht ausbringen und verarbeiten. Durch entsprechende Formgebung kann die Schutzwand in vielfältiger Ausdehnung vielfach gewölbt ausgeführt werden.

In diesem Zusammenhang ist für die Verarbeitung die gute Fließfähigkeit von großer Bedeutung. Im unausgehärteten Zustand weist der der Baustoff in den meisten Kombinationen eine höhere Fließfähigkeit (Konsistenzklasse) als Frischbeton auf.

Für eine Verarbeitung des Baustoffes im Gezeitengebiet oder bei nassem Schotter bietet es sich an, einen Klebstoff zu verwenden, der unter Wassereinfluss aushärtbar ist. Weitere geeignete Klebstoffe sind Zweikomponenten-Epoxidharz-, Einkomponenten-Polyurethan- oder Zweikomponenten-Polyurethan-Klebstoff.

Vorzugsweise liegt die Körnung der Zuschlagstoffe zwischen 0,1 bis 0,3 mm. Innerhalb dieser Bandbreite ist noch eine gute Wasserdichtigkeit gegeben ohne dass die Siebung der Baustoffe zu sehr eingeschränkt werden müsste. Der Durchlässigkeitsbeiwert kf des Baustoffs beträgt idealer Weise maximal 5x10-10 m/s.

Werden größere Korngrößen verwendet, so nimmt die Wasserdurchlässigkeit zu. Die Schutzwand eignet sich dann bei Anordnung im Böschungsbereich eines Deiches als Wasserboden- und Uferschutz und hilft, gegen Erodierung in Küsten- und Uferbereich zu wirken, in dem Wellen bzw. der Wellenauflauf abgebremst und absorbiert wird. Günstige Korngrößen der Zuschlagstoffe liegen hierbei vorzugsweise zwischen 2 bis 150 mm.

Günstig ist auch die Dichte der Schutzwand, die höher ist als die von Wasser und gegebenenfalls durch Zugabe von Stahl erhöht und variiert werden kann. Damit wird ein Auf- und Wegschwimmen der Schutzwand gerade im Brandungsbereich wirksam unterbunden.

Ein weiterer Vorteil liegt in der Umweltverträglichkeit des Baustoffes. Bei Verwendung von Zweikomponenten-Epoxydharz-Klebstoff als organischer Klebstoff zum Beispiel, hat der Baustoff keinerlei toxische Wirkung auf Schimmelpilze und gilt als microbiell schwer abbaubar. Trotzdem können aus der Schutzwand eluierbare Substanzen gut abgebaut werden, wie Materialversuche gezeigt haben. Wie Waschversuche beweisen, gibt es keine chemische Wechselwirkung zwischen Wasser und den Bestandteilen des Baustoffes. Somit lässt sich die Schutzwand sogar auch in Dämmen und Eingrenzungen für Trinkwasserreservoirs verwenden.

Schließlich kann der erfindungsgemäße Bodenbelag nach seiner Nutzungsphase in einer Erd- oder Schotterwaschanlage ohne negative Umweltauswirkungen entsorgt werden. Alternativ ist nach einer Zerkleinerung auch eine Wiederverwendung als Granulat möglich.

In einer weiteren Ausführungsform ist die Wanddicke d_{w} der Schutzwand kleiner ist als die Ausdehnung in Höhe h_{w} und Länge l_{w}, So können beispielsweise mattenförmige Schutzwände Vorort mit verklebtem Schotter hergestellt, und anschließend auf einem Fliessponton ins Wasser abgesenkt werden, um als Wasserbodenschutz gegen Erodierung [Häfen, Spundwände usw.] verwendet werden. Schutzwände in der einer Länge von max 40 m, einer Breite von bis zu 25 m und einer Dicke bis zu 50 cm könnten vorgefertigt am Bauort verarbeitet werden.

Hinsichtlich des Deiches wird die Aufgabe erfindungsgemäß durch die Merkmale des Anspruches 12 gelöst.

Der Deich weist einen Deichkörper mit einem im Wesentlichen trapezähnlichen Querschnitt auf. Zwischen der Innen- und Außenböschung ist eine formbeständige Schutzwand vorgesehen, die in Deichlängs- und -höhenrichtung sich erstreckt, wobei die Schutzwand nach einem der vorstehend beschriebenen Ausführungsbeispiele gestaltet ist.

Die Schutzwand wirkt hierbei als Dichtung. Die Dichtung verringert die Sickerwassermengen und trägt zur Standsicherheit des Deiches bei. Möglich sind wasserseitige Oberflächendichtungen, wie sie später zu der alternativen Lösung der Aufgabe der Erfindung entsprechend den Merkmalen des Anspruches 15 erläutert sind, und Kerndichtungen (Innendichtungen). Verzugsweise verläuft die Schutzwand im Deichkörper vertikal von der Deichkrone durch den Deichquerschnitt und bindet im Idealfall in eine den Deich unterlagernde dichte Bodenschicht ein. Die Schutzwand vermeidet ein Unterströmen des Deiches, welches Materialbewegungen und weiteren Erosionen, die den Deich immer instabiler machen, zur Folge hätte.

Ein derart abgedichteter Damm kann mit steileren Böschungswinkeln ausgeführt werden, wodurch sich der Deichquerschnitt reduzieren lässt, was bei begrenzten räumlichen Verhältnissen von zusätzlichem Vorteil ist. Als weitere Variante ist eine asymmetrische Positionierung der Schutzwand mit einem Versatz zu einer der beiden Böschungen möglich, wobei die wasserseitige Positionierung eine Erosion in der wasserseitigen Böschung weiter reduziert.

Schutzwände können auch in bereits bestehende Deichbauwerke nachträglich eingebaut werden und stellen eine einfache und wirtschaftliche Methode zur Ertüchtigung oder Instandsetzung von Deichen dar.

Eine weitere erfindungsgemäße Lösung der Aufgabe bezüglich des Deiches ist durch die Merkmale des Anspruches 15 gegeben.
Erfindungsgemäß weist der Deich einen aufgeschütteten Deichkörper mit einer wasser- und landseitigen Böschung auf, wobei der wasserseitigen Böschung eine formbeständige Schutzwand vorgelagert ist. Die Schutzwand ist entsprechend einem der vorstehend erläuterten Ausführungsbeispiele ausgeführt. Günstige Neigungswinkel α der Schutzwand gegenüber der Wasseroberfläche liegen zwischen 15 bis 90 Grad, wobei der Neigungswinkel α verschieden vom Böschungswinkel β sein kann, wenn z.B. die Schutzwand von der Böschung abgesetzt, separat ausgeführt ist. Für eine sichere Verankerung der Schutzwand kann diese durch einen zusätzlichen Sockel im Bereich des Deichfußes, der Böschung und/oder im Baugrund befestigt werden.

Der erfindungsgemäße Deich hat den Vorteil, dass bei einer Positionierung dicht am Ufer bzw. an der Küste und bei Deichen mit tief liegendem schmalem Vorland ein wirkungsvoller Böschungsschutz gegeben ist. Eine geschlossene, dichte und stark verwurzelte Grasnarbe bietet für Deiche i.d.R. einen ausreichenden und wirtschaftlichen Böschungsschutz gegen Strömungs- und Wellenangriff. Hinzu kommt ein wirkungsvoller Schutz gegen Treibgut (z.B. auch Baumstämme, im Winter ggf. treibende Eisschollen und Eisstau). Das gilt auch bei häufig wiederkehrenden hohen und lang anhaltenden Wasserständen.

Eine weitergehende Abdichtung gegen Unterläufigkeit und Durchsickerung kann dadurch bewirkt werden, dass sich die Schutzwand vom Deichkörper bis in den Baugrund erstreckt.

Die Erfindung ermöglicht den Bau von steilen Böschungen (steiler als 1:3), da sie bei Ausführung als flächenhafte Sicherung den Deichkörpers vor Beschädigungen schützt. Bei schnell fallendem Wasserspiegel ist aus Gründen der Standsicherheit eine schwere und wasserdurchlässige Schutzwand als (offene) Deckwerk erforderlich. Hier kommt eine vorteilhafte Eigenschaft der Erfindung zum tragen, wonach je nach Wahl der Körnung die Wasserdurchlässigkeit der Schutzwand bestimmt werden kann. Soll die Schutzwand wie für den vorstehenden Einsatzwall wasserdurchlässig ausgeführt werden, so werden Korngrößen für die mineralischen Zuschlagstoffe von etwa oberhalb 2 mm zu verwenden sein. Für eine wasserundurchlässige Schutzwand liegt die Körnung entsprechend darunter.

Der Bau eines Deiches mit einer Schutzwand, die sich in den Deichkörper hinein erstreckt, geschieht in folgenden Verfahrensschritten:
- Einbringen eines von der Deichkrone oder Böschung in die Tiefe des Deichkörpers sich erstreckenden Grabens mit Ausdehnung in Längsrichtung des Deichs,
- verfüllen des Grabens mit einer Schutzwand aus einem Baustoff aus mineralischen Zuschlagstoffen und einem organischen Klebstoff,
- Verdichten des Baustoffs und
- Aushärten des Baustoffs.

Bei einer Bauweise, bei der die Schutzwand auf die Böschung aufgebracht wird, wird der Schotter jeweils schichtweise bis zu einer Höhe von 300 mm aufgetragen und dann mit einem organischen Klebstoff verklebt.

Vorteilhafte Ausführungsformen der Erfindungen werden nachfolgend unter Bezugnahme auf die beigefügte Zeichnung erläutert. Es zeigt:
- Fig. 1: einen nach dem Stand der Technik ausgeführten Deich ohne Schutzwand,
- Fig. 2: einen schematischen Querschnitt eines Deiches mit einer in den Deichkörper sich erstreckenden Schutzwand,
- Fig. 3: einen schematischen Querschnitt eines Deiches mit einer auf die Böschung aufgelegten Schutzwand und
- Fig. 4: einen Querschnitt eines Deiches mit einer auf einem Sockel aufgesetzten Schutzwand.

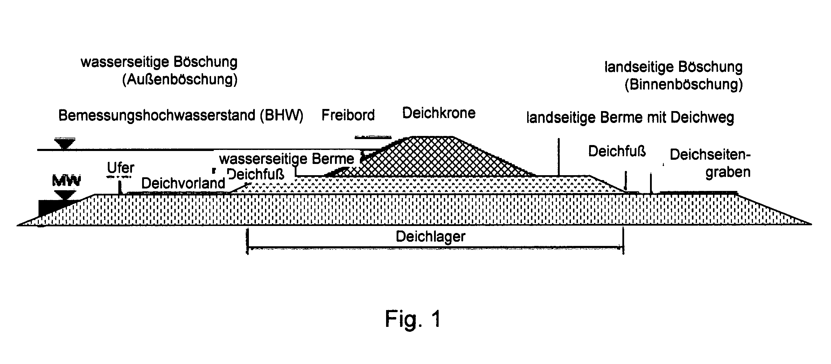

Fig. 1 zeigt den typisch trapezförmigen Querschnitt eines Deiches. Der Deichkörper 1 baut oberhalb des Baugrundes 2 auf. Im Bereich des Baugrundes 2, auf der gesamten Breite des Deiches, dem sogenannten Deichlager läuft der Deichkörper 1 wasser- und landseitig in zungenförmigen Bermen 3 aus.

Mit der Deichkrone 4 schließt der Deichkörper 1 nach oben hin ab. Er ist meist zur Entwässerung zum Wasser hin geneigt oder gewölbt. Sie ist, wenn nicht befahrbar, mit Rasensoden gegen Erosion (Erdabtragung) geschützt. Soweit die Deichkrone 4 zur Inspektion mit leichten Fahrzeugen oder für den Fahrradverkehr genutzt ist, wird eine Befestigung benötigt. Landseitig angelegte Bermen 3 erhöhen die Standsicherheit und tragen i.d.R. den Deichverteidigungsweg, der zur Deichinstandhaltung und bei Katastrophenhochwasser der Deichverteidigung dient. Die Deichverteidigungswege müssen deshalb hinsichtlich der Wegführung, der Abmessungen und Befestigung im Katastrophenfall einen zügigen, gefahrlosen Verkehr erlauben und die Belastung durch schwere Fahrzeuge und Geräte aufnehmen können.

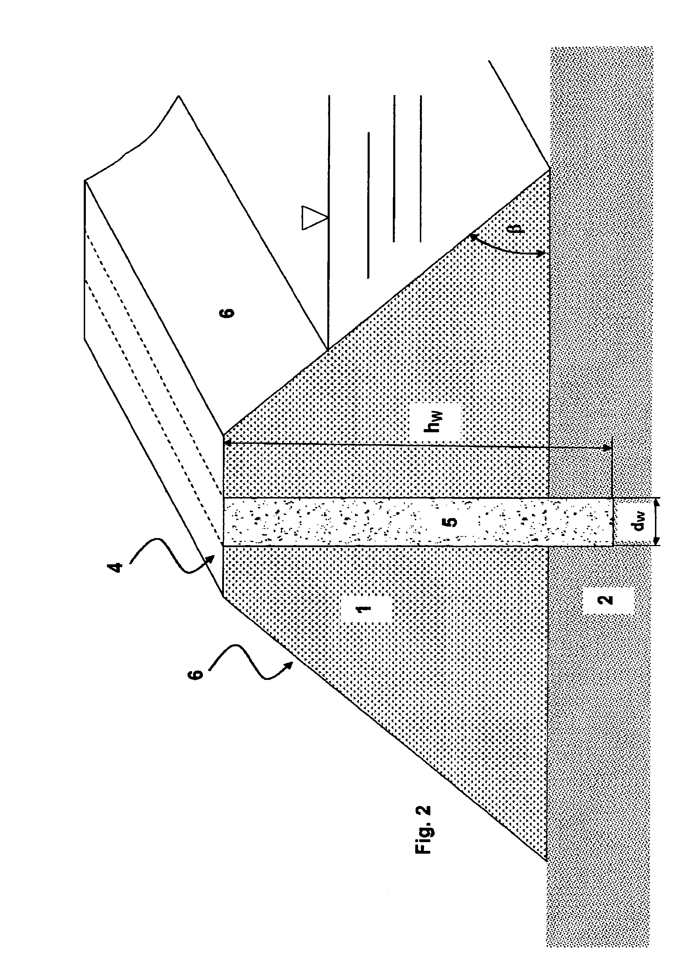

Basierend auf der grundsätzlichen Bauform eines Deiches ist in Fig. 2 eine erste Ausführungsform der Erfindung gezeigt, bei der der trapezförmige Deichkörper 1 zu dessen Abdichtung gegen Erosion eine vertikale Schutzwand 5 aufweist. Die im Wesentlichen ebene, plattenförmige Schutzwand 5 erstreckt sich in Längsrichtung des Deiches und in ihrer Höhe vom Baugrund 2 bis in die Deichkrone 4. Etwa ein Fünftel der Höhe der Schutzwand 5 erstreckt sich in den Baugrund 2. Mit ihrem kronenseitigen Ende schließt die Schutzwand 5 bündig mit der Deichkrone 4 ab und könnte als Teil eines nicht weiter dargestellten Deichweges dienen. In weiteren, nicht dargestellten Abschnitten des Deiches erstreckt sich die Schutzwand 5 auch über die Deichkrone 4 hinaus. In seiner Längsrichtung setzt sich die Schutzwand 5 aus mehreren, aneinander angrenzenden Wandelementen zusammen. Ersichtlich ist die Wanddicke d_{w} der Schutzwand 5 deutlich kleiner ist als die Ausdehnung in Höhe h_{w} und Länge I_{w}.

Der Baustoff der Schutzwand 5 ist eine Verbindung aus Sand und einem organischen Klebstoff. Mineralische Zuschlagstoffe wie beispielsweise Sand. Die Körnung beträgt zwischen 0,1 bis 0,3 mm, somit ist die Schutzwand praktisch wasserdicht und beugt damit einer Durchnässung oder Durchspülung des Dammkörpers vor.

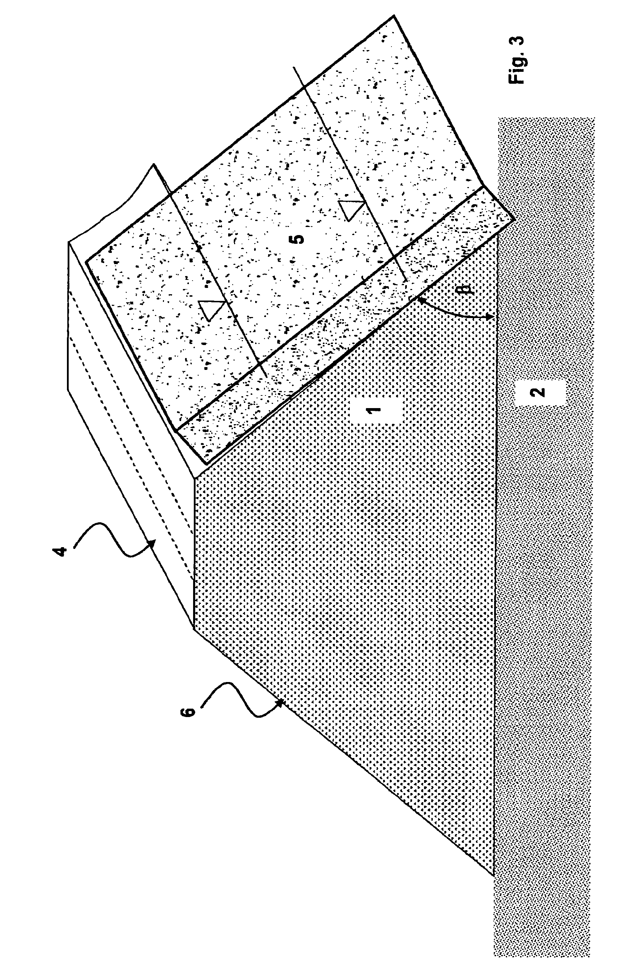

Eine zweite Ausführungsform eines Deiches ist in Fig. 3 zu sehen. Dort ist die Schutzwand 5 in einem Neigungswinkel α zur Ebene des Baugrunds 2 geneigt und auf die wasserseitige Böschung 6 aufgebracht. Bei dieser Ausführungsform ist der Neigungswinkel α gleich dem Böschungswinkel β. Die Höhe h_{w} der Schutzwand 5 überragt knapp den Bemessungshochwasserstand. Bodenseitig erstreckt sich die Schutzwand bis unter den Niedrigwasserstand um auch bei Niedrigwasser Erosionen zu vermeiden und eine sichere Verankerung zu ermöglichen.

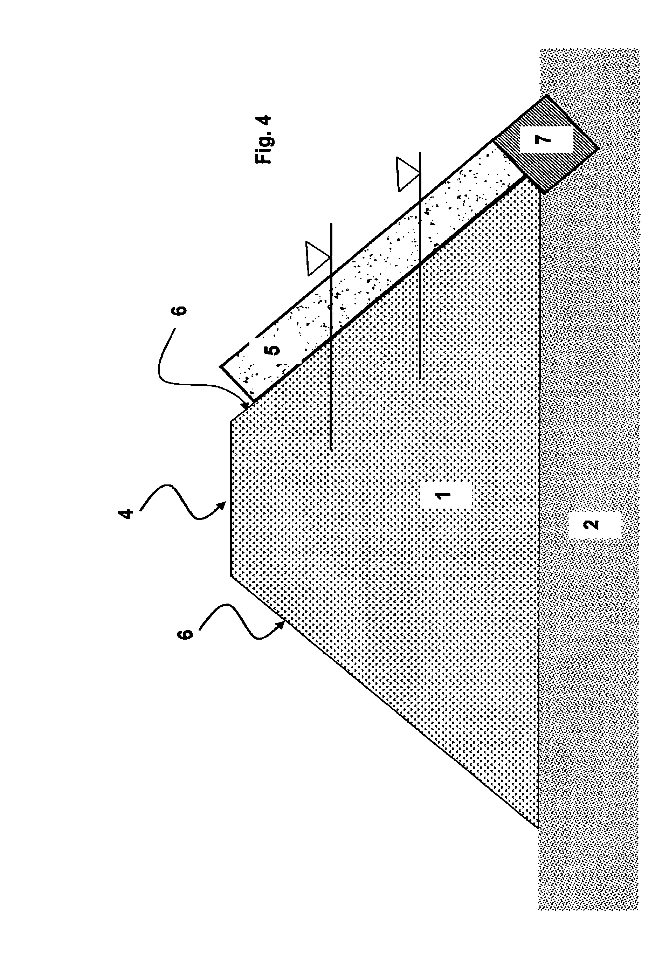

Eine Ausführung mit gegenüber der zweiten Ausführung verbesserter Standfestigkeit der böschungsseitigen Schutzwand 5 ist mit dem dritten Ausführungsbeispiel in Fig. 4 gezeigt. Hier dient ein in der wasserseitigen Böschung 6 verankerter Sockel 7 zur Fixierung der Schutzwand 5 gegen ein Abdriften oder Absacken bei Unterspülung.

Bei der zweiten und dritten Ausführungsform der Schutzwand 5 sind wasserdichte oder -durchlässige Zusammensetzungen der mineralischen Zuschlagstoffe möglich.

Von großem Vorteil ist bei der Herstellung der Schutzwände 5, dass Sand als mineralischer Zuschlagstoff bei küstennahen Anwendungen naturgemäß praktisch unbegrenzt zur Verfügung steht.

### Bezugszeichenliste

- 1: Deichkörper
- 2: Baugrund
- 3: Berme
- 4: Deichkrone
- 5: Schutzwand
- 6: Böschung
- 7: Sockel

- α: Neigungswinkel
- β: Böschungswinkel
- d_{w}: Wanddicke
- h_{w}: Höhe
- I_{w}: Länge

## Patentansprüche

1. Schutzwand insbesondere für Deiche von Flussufern und Küsten mit einer flächen-, plattenförmigen oder kubischen Ausbildung, wobei die Schutzwand (5) einen zumindest einen in Längs- und Höhenrichtung ausgedehnten Abschnitt aus einem wasserundurchlässigen Baustoff aufweist, **dadurch gekennzeichnet, dass** der Baustoff der Schutzwand (5) eine Verbindung aus verdichteten, mineralischen Zuschlagstoffen und einem organischen Klebstoff ist.

2. Schutzwand nach Anspruch 1, **dadurch gekennzeichnet, dass** der Baustoff im unausgehärtetem Zustand eine höhere Fließfähigkeit (Konsistenzklasse) als Frischbeton aufweist.

3. Schutzwand nach einem der vorhergehenden Ansprüche, **dadurch gekennzeichnet, dass** die Körnung der Zuschlagstoffe 0,1 bis 0,3 mm beträgt.

4. Schutzwand nach einem der vorhergehenden Ansprüche, **dadurch gekennzeichnet, dass** die Körnung der Zuschlagstoffe 2 bis 150 mm beträgt.

5. Schutzwand nach einem der vorhergehenden Ansprüche, **dadurch gekennzeichnet, dass** der mineralische Zuschlagstoff Sand und/oder Schotter umfasst.

6. Schutzwand nach einem der vorhergehenden Ansprüche, **dadurch gekennzeichnet, dass** der Klebstoff ein unter Wassereinfluss aushärtbarer Klebstoff ist.

7. Schutzwand nach einem der vorhergehenden Ansprüche, **dadurch gekennzeichnet, dass** der Klebstoff ein Zweikomponenten-Epoxidharz- oder ein Einkomponenten-Polyurethan- oder ein Zweikomponenten-Polyurethan-Klebstoff ist.

8. Schutzwand nach einem der vorhergehenden Ansprüche, **dadurch gekennzeichnet, dass** der Durchlässigkeitsbeiwert k_{f} des Baustoffs maximal 5x10⁻¹⁰ m/s beträgt.

9. Schutzwand nach einem der vorhergehenden Ansprüche, **dadurch gekennzeichnet, dass** die Dichte der Schutzwand (5) größer ist, als die von Wasser.

10. Schutzwand nach einem der vorhergehenden Ansprüche, **dadurch gekennzeichnet, dass** die Schutzwand (5) eine Zugabe aus Stahl aufweist.

11. Schutzwand nach einem der vorhergehenden Ansprüche, **dadurch gekennzeichnet, dass** die Wanddicke d_{w} der Schutzwand (5) kleiner ist als die Ausdehnung in Höhe h_{w} und Länge I_{w},

12. Deich insbesondere für Fluss- oder Seedeiche, mit einem Deichkörper, der im Wesentlichen einen trapezähnlichen Querschnitt aufweist, wobei der Deich eine zwischen Innen- und Außenböschung ausgebildete, in Deichlängs- und - höhenrichtung erstreckende, formbeständige Schutzwand (5) aufweist, **dadurch gekennzeichnet, dass** der Deich eine nach den vorhergehenden Ansprüchen ausgebildete Schutzwand (5) aufweist.

13. Deich nach Anspruch 12, **dadurch gekennzeichnet, dass** sich die Schutzwand bis unterhalb des Deichkörpers (1) in den Baugrund (2) erstreckt.

14. Deich nach einem der Ansprüche 12 bis 13, **dadurch gekennzeichnet, dass** sich die Schutzwand (5) bis in die Deichkrone (4) erstreckt oder an der Innen- oder Außenböschung (6) endet.

15. Deich insbesondere für Fluss- oder Seedeiche, mit einem aufgeschütteten Deichkörper und mit einer wasser- und landseitigen Böschung (6), wobei der wasserseitigen Böschung (6) eine formbeständige Schutzwand (5) vorgelagert ist, **dadurch gekennzeichnet, dass** der Deich eine nach den Ansprüchen 1 bis 11 ausgebildete Schutzwand (5) aufweist.

16. Deich nach Anspruch 15, **dadurch gekennzeichnet, dass** die Schutzwand (5) auf der Böschung (6) aufliegt oder zumindest teilweise in sie hineinragt.

17. Deich nach Anspruch 15 oder 16, **dadurch gekennzeichnet, dass** die Schutzwand (5) gegenüber der Wasseroberfläche einen Neigungswinkel α von 15 bis 90 Grad aufweist.

18. Deich nach Anspruch 17, **dadurch gekennzeichnet, dass** der Neigungswinkel α gleich dem Böschungswinkel β ist.

19. Deich nach einem der Ansprüche 12 bis 18, **dadurch gekennzeichnet, dass** der Deich einen in der Böschung (6) und/oder im Baugrund verankerten (2) Sockel (7) aufweist, der die Schutzwand (5) trägt.

20. Deich nach einem der Ansprüche 12 bis 19, **dadurch gekennzeichnet, dass** sich die Schutzwand (5) vom Deichkörper (1) in den Baugrund (2) erstreckt.

21. Deich nach einem der Ansprüche 12 bis 20, **dadurch gekennzeichnet, dass** der Deich mehrere Wandelemente aufweist, die in Deichlängsrichtung aneinander angrenzen.

22. Deich nach einem der Ansprüche 12 bis 21, **dadurch gekennzeichnet, dass** der Deich mehrere in Tiefenrichtung des Deiches gestaffelte Wandelemente aufweist.

23. Deich nach Anspruch 22, **dadurch gekennzeichnet, dass** die in Tiefenrichtung gestaffelten Wandelemente voneinander verschiedene Wandhöhen aufweisen.

24. Verfahren zur Herstellung eines Deichs nach einem der Ansprüche 12 bis 23, **gekennzeichnet durch** die folgenden Verfahrensschritte:
• Einbringen eines von der Deichkrone oder Böschung (2) in die Tiefe des Deichkörpers sich erstreckenden Grabens mit Ausdehnung in Längsrichtung des Deichs,
• Verfüllen des Grabens mit einer Schutzwand (5) aus einem Baustoff aus mineralischen Zuschlagstoffen und einem organischen Klebstoff,
• Verdichten des Baustoffs,
• Aushärten des Baustoffs.
